# EUROPEAN PATENT APPLICATION

(11) **EP 4 590 000 A1**
(43) Date of publication of application: **23.07.2025**
(21) Application number: 22958503.9
(22) Date of filing: 16.09.2022
(51) Int. Cl.: H04W 4/70, H04W 72/25

(54) **METHOD AND APPARATUS FOR DETERMINING TARGET TERMINAL, AND COMMUNICATION DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2022/119424
(87) International publication number: WO 2024/055313

(57) **Abstract**

A method and apparatus for determining a target terminal, and a communication device and a storage medium. The method comprises: for a sidelink (SL) grant, a sending terminal selects a target terminal that at least satisfies a carrier aggregation transmission condition (201). The carrier aggregation transmission condition is satisfied, so that the target terminal can receive data by means of a carrier associated with the SL grant, thereby reducing packet loss and improving data communication reliability.

## Description

### TECHNICAL FIELD

The present disclosure relates to, but is not limited to, the technical field of communication, and in particular to, a method and apparatus for determining a target terminal, a communication device, and a storage medium.

### BACKGROUND

In order to support direct communication between a user equipment (UE) and another UE, the sidelink communication mode is introduced, and the interface between UE and UE is a PC-5 interface. According to a correspondence relationship between the transmitting terminal and the target terminal, three transmission modes are supported on the sidelink, i.e., the unicast, multicast and broadcast. There are two ways to allocate transmission resources for sidelink communication, one is the way of dynamic scheduling performed by the network, which is referred to as mode 1, and the other is the way of autonomous selection performed by the UE from the resource pool broadcasted by the network, which is referred to as mode 2. The dynamic scheduling means that the network dynamically allocates transmission resources for the sidelink to the UE based on the cached data reported by the UE, while the autonomous selection means that the UE randomly selects transmission resources by itself from the resource pool broadcasted by the network or a pre-configured resource pool.

### SUMMARY

The embodiments of the present disclosure disclose a method and an apparatus for determining a target terminal, a communication device and a storage medium.

According to a first aspect of the present disclosure, a method for determining a target terminal is provided, where the method is performed by a transmitting terminal and the method includes:
selecting a target terminal that at least meets a carrier aggregation transmission condition for a sidelink (SL) grant.

In an embodiment, the carrier aggregation transmission condition includes:
the target terminal being associated with unicast, and the target terminal supporting data reception on a carrier associated with the SL grant.

In an embodiment, the carrier aggregation transmission condition includes:
the target terminal being associated with multicast and/or groupcast, and a transmission attribute associated with the target terminal supporting the carrier aggregation transmission.

In an embodiment, the carrier aggregation transmission condition includes:
the target terminal being associated with multicast and/or groupcast, the target terminal not having an associated transmission attribute, and the target terminal meeting a first transmission condition and/or a second transmission condition.

The first transmission condition includes: an SL discontinuous reception (DRX) being applicable to the target terminal, and a period of the SL grant being within an activation period of the target terminal.

The second transmission condition includes: among logical channels that meet a third transmission condition and a medium access control control element (MAC CE), the target terminal having at least one MAC CE with highest priority and/or having at least one logical channel with highest priority.

In an embodiment, the third transmission condition includes:
having SL data to be transmitted, and
in a case that any of the logical channels has an SBj, SBj being greater than 0, and
in a case that the SL grant is a configured grant type 1, the logical channel being configured to allow a medium access control service data unit (MAC SDU) to be transmitted on the configured grant type 1, and
in a case that a list of allowed configured grants is configured, the list containing identifiers of configured grants associated with the SL grant, and
in a case that the SL grant does not have an associated physical sidelink feedback channel (PSFCH) resource, a hybrid automatic repeat request (HARQ) attribute associated with the logical channel being disabled.

In an embodiment, selecting the target terminal that at least meets the carrier aggregation transmission condition includes:
selecting the target terminal that meets the carrier aggregation transmission condition and meets a first transmission condition and/or a second transmission condition.

The first transmission condition includes: an SL discontinuous reception (DRX) being applicable to the target terminal, and a period of the SL grant being within an activation period of the target terminal.

The second transmission condition includes: among logical channels that meet a third transmission condition and a medium access control control element (MAC CE), the target terminal having at least one MAC CE with highest priority and/or having at least one logical channel with highest priority.

In an embodiment, the third transmission condition includes:
having SL data to be transmitted, and
in a case that any of the logical channels has an SBj, SBj being greater than 0, and
in a case that the SL grant is a configured grant type 1, the logical channel being configured to allow a MAC SDU to be transmitted on the configured grant type 1, and
in a case that a list of allowed configured grants is configured, the list containing identifiers of configured grants associated with the SL grant, and
in a case that the SL grant does not have an associated PSFCH resource, a hybrid automatic repeat request (HARQ) attribute associated with the logical channel being disabled.

In an embodiment, the method further includes:
in response to failing to select the target terminal that meets the carrier aggregation transmission condition and the first transmission condition and/or the second transmission condition, discarding the SL grant.

In an embodiment, selecting the target terminal that at least meets the carrier aggregation transmission condition includes:
during a processing procedure of logical channel prioritization (LCP), selecting the target terminal that at least meets the carrier aggregation transmission condition.

According to a second aspect of the present disclosure, an apparatus for determining a target terminal is provided, which is provided in a transmitting terminal and includes:
a processing module, configured to select a target terminal that at least meets a carrier aggregation transmission condition for a sidelink (SL) grant.

In an embodiment, the carrier aggregation transmission condition includes:
the target terminal being associated with unicast, and the target terminal supporting data reception on a carrier associated with the SL grant.

In an embodiment, the carrier aggregation transmission condition includes:
the target terminal being associated with multicast and/or groupcast, and a transmission attribute associated with the target terminal supporting the carrier aggregation transmission.

In an embodiment, the carrier aggregation transmission condition includes:
the target terminal being associated with multicast and/or groupcast, the target terminal not having an associated transmission attribute, and the target terminal meeting a first transmission condition and/or a second transmission condition.

The first transmission condition includes: an SL discontinuous reception (DRX) being applicable to the target terminal, and a period of the SL grant being within an activation period of the target terminal.

The second transmission condition includes: among logical channels that meet a third transmission condition and a medium access control control element (MAC CE), the target terminal having at least one MAC CE with highest priority and/or having at least one logical channel with highest priority.

In an embodiment, the third transmission condition includes:
having SL data to be transmitted, and
in a case that any of the logical channels has an SBj, SBj being greater than 0, and
in a case that the SL grant is a configured grant type 1, the logical channel being configured to allow a medium access control service data unit (MAC SDU) to be transmitted on the configured grant type 1, and
in a case that a list of allowed configured grants is configured, the list containing identifiers of configured grants associated with the SL grant, and
in a case that the SL grant does not have an associated physical sidelink feedback channel (PSFCH) resource, a hybrid automatic repeat request (HARQ) attribute associated with the logical channel being disabled.

In an embodiment, the processing module is specifically configured to:
select the target terminal that meets the carrier aggregation transmission condition and meets a first transmission condition and/or a second transmission condition.

The first transmission condition includes: an SL discontinuous reception (DRX) being applicable to the target terminal, and a period of the SL grant being within an activation period of the target terminal.

The second transmission condition includes: among logical channels that meet a third transmission condition and a medium access control control element (MAC CE), the target terminal having at least one MAC CE with highest priority and/or having at least one logical channel with highest priority.

In an embodiment, the third transmission condition includes:
having SL data to be transmitted, and
in a case that any of the logical channels has an SBj, SBj being greater than 0, and
in a case that the SL grant is a configured grant type 1, the logical channel being configured to allow a MAC SDU to be transmitted on the configured grant type 1, and
in a case that a list of allowed configured grants is configured, the list containing identifiers of configured grants associated with the SL grant, and
in a case that the SL grant does not have an associated PSFCH resource, a hybrid automatic repeat request (HARQ) attribute associated with the logical channel being disabled.

In an embodiment, the processing module is further configured to:
in response to failing to select the target terminal that meets the carrier aggregation transmission condition and the first transmission condition and/or the second transmission condition, discard the SL grant.

In an embodiment, the processing module is specifically configured to:
during a processing procedure of logical channel prioritization (LCP), select the target terminal that at least meets the carrier aggregation transmission condition.

According to a third aspect of the present disclosure, a communication device is provided, where the communication device includes:
a processor; and
a memory for storing instructions executable by the processor;
where the processor is configured to implement the method for determining the target terminal described in the first aspect when running the executable instructions.

According to a fourth aspect of the present disclosure, a computer storage medium is provided, where the computer storage medium stores a computer executable program, and the executable program implements the method for determining the target terminal described in the first aspect when being executed by a processor.

In the embodiments of the present disclosure, for a sidelink (SL) grant, the transmitting terminal selects a target terminal that at least meets a carrier aggregation transmission condition. If the carrier aggregation transmission condition is met, the target terminal can receive data through the carrier associated with the SL grant, thereby reducing data packet loss and improving the reliability of data communication.

It should be understood that the foregoing general description and the following detailed description are exemplary and explanatory only and do not limit the embodiments of the present disclosure.

### BRIEF DESCRIPTION OF THE DRAWINGS

FIG. 1 is a schematic structural diagram of a wireless communication system.
FIG. 2 is a flow chart of a method for determining a target terminal shown according to an exemplary embodiment.
FIG. 3 is a flow chart of a method for determining a target terminal shown according to an exemplary embodiment.
FIG. 4 is a flow chart of a method for determining a target terminal shown according to an exemplary embodiment.
FIG. 5 is a block diagram of an apparatus for determining a target terminal shown according to an exemplary embodiment.
FIG. 6 is a block diagram of a UE shown according to an exemplary embodiment.
FIG. 7 is a block diagram of a base station shown according to an exemplary embodiment.

### DETAILED DESCRIPTION

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure, as detailed in the appended claims.

Terms used in the embodiments of the present disclosure are used solely for the purpose of describing certain embodiments and are not intended to limit the embodiments of the present disclosure. The singular forms of "a/an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "when... " or "in the case... " or "in response to determination".

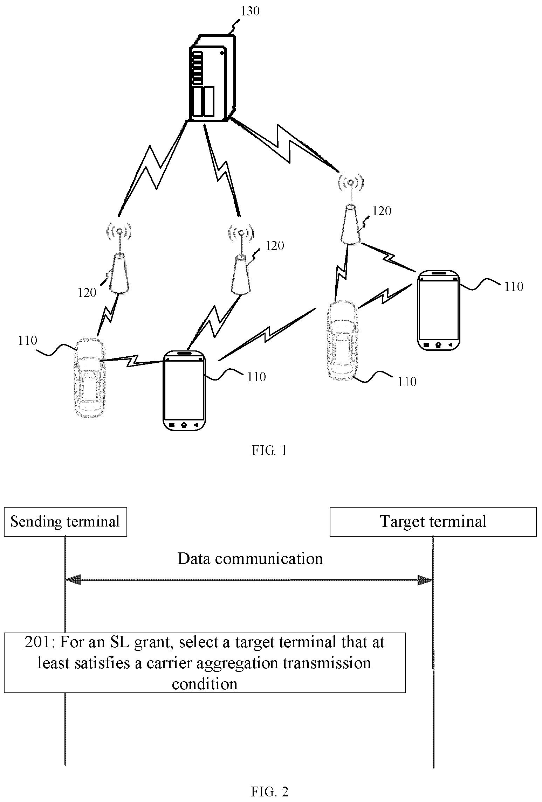

Referring to FIG. 1, a schematic structural diagram of a wireless communication system provided by an embodiment of the present disclosure is illustrated. As shown in FIG. 1, the wireless communication system is a communication system based on mobile communication technology, and the wireless communication system may include: several user equipments 110 and several base stations 120.

The user equipment 110 may refer to a device that provides voice and/or data connectivity to a user. The user equipment 110 may communicate with one or more core networks via a radio access network (RAN). The user equipment 110 may be an Internet of Things (IoT) user equipment, such as a sensor device, a mobile phone, and a computer with an IoT user equipment, for example, it may be a fixed, portable, pocket-sized, handheld, computer-built-in, or vehicle-mounted apparatus, e.g., a station (STA), a subscriber unit, a subscriber station, a mobile station, a mobile, a remote station, an access point, a remote user equipment (remote terminal), an access user equipment (access terminal), a user terminal, a user agent, a user device or a user equipment. Alternatively, the user equipment 110 may be a device of an unmanned aerial vehicle. Alternatively, the user equipment 110 may be a vehicle-mounted device, for example, it may be a trip computer with a wireless communication function, or a wireless user equipment externally connected to a trip computer. Alternatively, the user equipment 110 may be a roadside device, for example, a street lamp, a signal lamp, or other roadside device with a wireless communication function.

The base station 120 may be a network side device in a wireless communication system. The wireless communication system may be the 4th generation mobile communication technology (4G) system, also known as a long term evolution (LTE) system, or, the wireless communication system may be a 5G system, also known as a new air interface system or a 5G NR system. Alternatively, the wireless communication system may be a next generation system of the 5G system. The access network in the 5G system may be referred to as a new generation-radio access network (NG-RAN).

The base station 120 may be an evolved base station (eNB) used in a 4G system. Alternatively, the base station 120 may also be a base station (gNB) using a centralized and distributed architecture in a 5G system. When the base station 120 uses the centralized and distributed architecture, it usually includes a central unit (CU) and at least two distributed units (DUs). The central unit is provided with protocol stacks of a packet data convergence protocol (PDCP) layer, a radio link layer control protocol (Radio Link Control, RLC) layer, and a media access control (MAC) layer; and the distributed unit is provided with a protocol stack of a physical (PHY) layer. The specific implementation manner of the base station 120 is not limited by the embodiments of the present disclosure.

A wireless connection may be established between the base station 120 and the user equipment 110 through a wireless air interface. In different implementations, the wireless air interface is a wireless air interface based on the fourth generation mobile communication network technology (4G) standard, or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

In some embodiments, an End to End (E2E) connection may also be established between the user equipments 110, for example, a vehicle to vehicle (V2V) communication, a vehicle to Infrastructure (V2I) communication and a vehicle to pedestrian (V2P) communication in a vehicle to everything (V2X) communication.

Here, the above-mentioned user equipment may be considered as the terminal device of the following embodiments.

In some embodiments, the above-mentioned wireless communication system may further include a network management device 130.

Several base stations 120 are respectively connected with the network management device 130. The network management device 130 may be a core network device in the wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF) or a home subscriber server (HSS). The embodiments of the present disclosure do not limit the implementation form of the network management device 130.

In order to facilitate the understanding of those skilled in the art, the embodiments of the present disclosure list a plurality of implementations to clearly explain the technical solutions of the embodiments of the present disclosure. Those skilled in the art may understand that the implementations provided by the embodiments of the present disclosure may be performed alone, or may be performed together after being combined with the methods of other embodiments in the embodiments of the present disclosure, or may also be executed alone or in combination with some methods of other related technologies, which is not limited by the embodiments of the present disclosure.

The use of network dynamic scheduling or UE autonomous selection in the two resource allocation modes may be configured by the network side via an RRC signaling. The transmitting terminal sends sidelink control information (SCI) on a physical sidelink control channel (PSCCH) and sends SCI of a second phase on a physical sidelink shared channel (PSSCH). The SCI carries the location of the resource for transmitting data and identifiers of the source and target, etc. After receiving the SCI, the target terminal determines whether to receive the corresponding data and which process it corresponds to based on the identifiers of the source UE and destination UE. In a unicast connection, each UE corresponds to one destination identifier. In multicast, each UE may belong to one or more groups, and each group corresponds to one destination identifier. In broadcast, all UEs correspond to at least one destination identifier. For a HARQ-enabled data packet, the target terminal performs HARQ-ACK feedback for the PSSCH on the physical sidelink feedback channel (PSFCH). PSFCH resources are configured based on the granularity of the resource pool. Depending on the network implementation, some resource pools are configured with PSFCH resources, while some resource pools are not configured with PSFCH resources. Resource pools that are not configured with PSFCH resources are unable to transmit HARQ-enabled data packets.

The multiplexing function of the MAC layer of the transmitting terminal loads the data of a plurality of logical channels into one transmission channel, that is, multiplexes a plurality of MAC SDUs into one MAC PDU and sends the MAC PDU out through the physical layer channel. When multiple logical channels have data to send and the total amount of data exceeds the current granted transmission capacity, the question arises as to which logical channel should be given priority for transmission, which is referred to as logical channel prioritization processing.

Each logical channel has a priority for logical channel scheduling. The priority may be configured by the network. The network configures the priority for a UE in a connected state through a dedicated signaling and for a UE in an idle state through broadcasting. The network configures the priority for the logical channel based on the QoS of the data carried by this logical channel. When the terminal gets the scheduling opportunity, that is, obtains the resources for sidelink data transmission, the UE first selects the destination UE, i.e., takes the UE corresponding to the sidelink logical channel with the highest priority as the destination UE. Then the UE may decide on its own priority order of serving each sidelink logical channel according to the situation of each sidelink logical channel.

Carrier aggregation is a key technology in advanced long term evolution (LTE-Advanced, LTE-A). In order to meet the requirements of improving single-user peak rate and system capacity, one of the most straightforward ways is to increase the system transmission bandwidth. Therefore, the LTE-A system introduces a technology for increasing the transmission bandwidth, i.e., carrier aggregation (CA). The CA technology can aggregate a plurality of carriers (component carriers, CCs) together, thereby effectively improving the transmission rates on both uplink and downlink.

LTE V2X already supports sidelink carrier aggregation technology. Due to the limitation of transmitting and receiving capabilities, the terminal may only be able to receive sidelink services on one or several carriers. LTE V2X does not introduce any enhancement scheme regarding carrier selection/reselection for the limited receiving capability of the terminal. The reason is that LTE V2X only supports broadcast services and may rely on high-level implementation to determine which service is of interest and receive data only on the carrier associated with the service of interest.

In addition to broadcast and multicast services, NR sidelink further supports unicast services. For unicast services, if the transmitting carrier supported by the transmitting terminal and the receiving carrier supported by the target terminal are not completely consistent, data packet loss may occur. If the carrier supported by the transmitting terminal and the carrier supported by the target terminal do not overlap at all, the transmitting terminal and the target terminal cannot perform unicast communication.

Therefore, how to coordinate the transmitting terminal and the target terminal so that the transmitting terminal and the target terminal can improve the success rate of carrier aggregation transmission and reduce data packet loss is an issue that needs to be solved urgently.

As shown in FIG. 2, an embodiment of the present disclosure provides a method for determining a target terminal, which is executed by a transmitting terminal and the method includes the following.

In step 201, for a SL grant, a target terminal that at least meets a carrier aggregation transmission condition is selected.

Here, the SL grant may include but is not limited to an SL grant associated with any aggregated carrier transmission in a carrier aggregation transmission scenario.

In a possible implementation manner, the SL grant may be associated with one carrier.

The transmitting terminal may select the target terminal based on the SL grant, and then perform SL-based carrier aggregation transmission with the target terminal.

Here, the target terminal may be a destination of data transmission. The target terminal may also be represented by a target address.

The carrier aggregation transmission condition may be determined based on at least one of the following: a carrier associated with the SL grant, the carrier transmission capability of the target terminal, and a transmission attribute associated with the target terminal, etc.

If the carrier aggregation transmission condition is met, the target terminal can receive data through the carrier associated with the SL grant, thereby reducing data packet loss and improving the reliability of data communication.

In an embodiment, selecting the target terminal that at least meets the carrier aggregation transmission condition includes:
during a processing procedure of logical channel prioritization (LCP), selecting the target terminal that at least meets the carrier aggregation transmission condition.

During a processing procedure of logical channel prioritization (LCP), the multiplexing function of the MAC layer of the transmitting terminal may load the data of a plurality of logical channels into one transmission channel based on the logical channel priorities, that is, multiplex multiple MAC SDUs into one MAC PDU and send the MAC PDU out through the physical layer channel. The transmitting terminal may determine the target terminal in this process.

In a possible implementation manner, selecting the target terminal that at least meets the carrier aggregation transmission condition includes: selecting the target terminal that at least meets the carrier aggregation transmission condition to perform carrier aggregation transmission.

In a possible implementation, meeting the carrier aggregation transmission condition is one of the plurality of conditions for the transmitting terminal to select the target terminal, and the target terminal also needs to meet other conditions. For example, if SL DRX is applicable to the target terminal, a period of the SL grant is within the activation period of the target terminal.

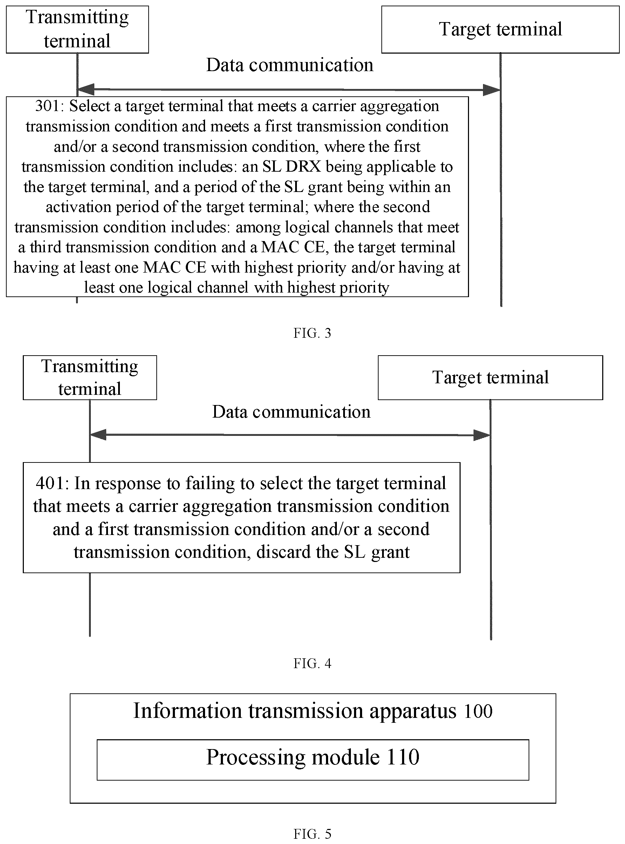

As shown in FIG. 3, an embodiment of the present disclosure provides a method for determining a target terminal, which is executed by a transmitting terminal and includes the following.

In step 301, a target terminal that meets a carrier aggregation transmission condition and meets a first transmission condition and/or a second transmission condition is selected.

The first transmission condition includes: an SL DRX being applicable to the target terminal, and a period of the SL grant being within an activation period of the target terminal.

The second transmission condition includes: among logical channels that meet a third transmission condition and a MAC CE, the target terminal having at least one MAC CE with highest priority and/or having at least one logical channel with highest priority.

For the first transmission condition, when the transmitting terminal obtains the SL grant, the transmitting terminal needs to select a target terminal that is within the SL activation period in the case where the target terminal is configured with SL DRX.

In a possible implementation manner, if the target terminal is not configured with SL DRX, the first transmission condition may be ignored.

For the second transmission condition, when the transmitting terminal obtains the SL grant, the transmitting terminal may select a target terminal having at least one of a MAC CE with highest priority and /or a logical channel with highest priority from the logical channels that meet the third transmission condition and a MAC control element (if any).

In a possible implementation manner, the target terminal needs to meet the carrier aggregation transmission condition, the first transmission condition and the second transmission condition at the same time.

In a possible implementation manner, the target terminal needs to meet the carrier aggregation transmission condition and the second transmission condition at the same time.

Exemplarily, if the target terminal is not configured with SL DRX, that is, the target terminal is always in a channel monitoring state, then the target terminal may only meet the carrier aggregation transmission condition and the second transmission condition.

In an embodiment, the third transmission condition includes:
having SL data to be transmitted, and
in a case that any of the logical channels has an SBj, SBj being greater than 0, and
in a case that the SL grant is a configured grant type 1, the logical channel being configured to allow a MAC SDU to be transmitted on the configured grant type 1, and
in a case that a list of allowed configured grants is configured, the list containing identifiers of configured grants associated with the SL grant, and
in a case that the SL grant does not have an associated PSFCH resource, a hybrid automatic repeat request (HARQ) attribute associated with the logical channel being disabled.

SBj represents the number of currently available tokens in the token bucket maintained by the j-th logical channel corresponding to a target terminal.

The resources associated with configured grant type 1 are resources configured by a network device, such as a base station, to the terminal for SL grant, through an instruction such as an RRC signaling. The resource configuration is activated, and the terminal may directly use the resource without additional activation (such as activation through PDCCH/DCI).

The resources associated with configured grant type 2 is a resource pool defined by a network device such as a base station through an instruction such as an RRC signaling. The resources are activated or deactivated by a physical downlink control channel (PDCCH). The terminal may use the resources only after activation.

In a possible implementation manner, the field sl-Configured GrantTypelAllowed may be used to determine whether the MAC SDU of the logical channel is allowed to be transmitted on the configured grant type 1. For example, when the value of sl-Configured GrantTypelAllowed is true, it may be determined that the MAC SDU of the logical channel is allowed to be transmitted on the configured grant type 1.

In a possible implementation manner, the list of configured grants allowed to be used may be represented by sl-AllowedCG-List. If a list of configured grants allowed to be used is configured, then the list of configured grants allowed to be used needs to include the identifiers of configured grants associated with the SL grant.

The target terminal needs to perform HARQ-ACK feedback for the PSSCH resource on the PSFCH. If the SL grant does not have associated PSFCH resources, then the hybrid automatic repeat request (HARQ) attribute associated with the logical channel is required to be disabled.

In an embodiment, the carrier aggregation transmission condition includes:
the target terminal being associated with unicast, and the target terminal supporting data reception on a carrier associated with the SL grant.

If the target terminal is associated with unicast, the transmitting terminal may select the target terminal by whether data reception is supported on the carrier associated with the SL grant.

In a possible implementation manner, the target terminal may indicate the receiving capability of the target terminal for the carrier associated with the SL grant through capability indication information.

In a possible implementation manner, the target terminal may send the capability indication information to at least one of the following: the transmitting terminal, and the network side (including: a core network and/or a base station). The transmitting terminal may obtain the receiving capability indication information from the target terminal and/or obtain the receiving capability indication information from the network side.

In a possible implementation, if the target terminal is associated with unicast, the transmitting terminal may determine the target terminal as the target terminal corresponding to the SL grant only when the target terminal supports data reception on the carrier associated with the SL grant, and meets the first transmission condition and/or the second transmission condition. The first transmission condition and the second transmission condition are as described above and will not be repeated herein.

In an embodiment, the carrier aggregation transmission condition includes:
the target terminal being associated with multicast and/or groupcast, and a transmission attribute associated with the target terminal supporting the carrier aggregation transmission.

If the target terminal is associated with multicast and/or groupcast, the transmitting terminal may select the target terminal through the transmission attribute (Tx Profile).

In a possible implementation manner, the Tx Profile may carry compatibility indication information for indicating whether the terminal device is compatible with carrier aggregation transmission. The transmission attribute associated with the target terminal supporting the carrier aggregation transmission means that the transmission attribute associated with the target terminal is compatible with carrier aggregation.

In a possible implementation manner, the Tx profile may also indicate the version (Release) of the terminal device, etc.

In a possible implementation manner, the Tx Profile may be associated with an identifier of a target terminal, such as a destination identifier (Destination ID).

In a possible implementation manner, if the target terminal is associated with multicast and/or groupcast and the transmission attribute associated with the target terminal supports the carrier aggregation transmission, and the first transmission condition and/or the second transmission condition need to be met, then the transmitting terminal may determine the target terminal as the target terminal corresponding to the SL grant. The first transmission condition and the second transmission condition are as described above and will not be repeated herein.

In an embodiment, the carrier aggregation transmission condition includes:
the target terminal being associated with multicast and/or groupcast, the target terminal not having an associated transmission attribute, and the target terminal meeting a first transmission condition and/or a second transmission condition.

The first transmission condition includes: an SL discontinuous reception DRX is applicable to the target terminal, and a period of the SL grant being within an activation period of the target terminal.

The second transmission condition includes: among logical channels that meet a third transmission condition and a medium access control control element (MAC CE), the target terminal having at least one MAC CE with highest priority and/or having at least one logical channel with highest priority.

If the target terminal is associated with multicast and/or groupcast, and the target terminal does not have a transmission attribute (Tx Profile), the transmitting terminal may select the target terminal according to the first transmission condition and/or the second transmission condition.

For the first transmission condition, when the transmitting terminal obtains the SL grant, the transmitting terminal needs to select a target terminal that is within the SL activation period in the case where the target terminal is configured with SL DRX.

In a possible implementation manner, if the target terminal is not configured with SL DRX, the first transmission condition may be ignored.

For the second transmission condition, when the transmitting terminal obtains the SL grant, the transmitting terminal may select a target terminal having at least one of a MAC CE with highest priority and /or a logical channel with highest priority from the logical channels that satisfy the third transmission condition and a MAC control element (if any).

In a possible implementation manner, the target terminal needs to meet the first transmission condition and the second transmission condition at the same time.

In a possible implementation manner, the target terminal needs to meet the second transmission condition.

Exemplarily, if the target terminal is not configured with SL DRX, that is, the target terminal is always in a channel monitoring state, then the target terminal may only meet the second transmission condition.

In an embodiment, the third transmission condition includes:
having SL data to be transmitted, and
in a case that any of the logical channels has an SBj, SBj being greater than 0, and
in a case that the SL grant is a configured grant type 1, the logical channel being configured to allow a MAC SDU to be transmitted on the configured grant type 1, and
in a case that a list of allowed configured grants is configured, the list containing identifiers of configured grants associated with the SL grant, and
in a case that the SL grant does not have an associated PSFCH resource, a hybrid automatic repeat request (HARQ) attribute associated with the logical channel being disabled.

SBj represents the number of currently available tokens in the token bucket maintained by the j-th logical channel corresponding to a target terminal.

The resources associated with configured grant type 1 are resources configured by a network device, such as a base station, to the terminal for SL grant, through an instruction such as an RRC signaling. The resource configuration is activated, and the terminal may directly use the resource without additional activation (such as activation through PDCCH/DCI).

The resources associated with configured grant type 2 is a resource pool defined by a network device such as a base station through an instruction such as an RRC signaling. The resources are activated or deactivated by a physical downlink control channel (PDCCH). The terminal may use the resources only after activation.

In a possible implementation manner, the field sl-Configured GrantTypelAllowed may be used to determine whether the MAC SDU of the logical channel is allowed to be transmitted on the configured grant type 1. For example, when the value of sl-Configured GrantTypelAllowed is true, it may be determined that the MAC SDU of the logical channel is allowed to be transmitted on the configured grant type 1.

In a possible implementation manner, the list of configured grants allowed to be used may be represented by sl-AllowedCG-List. If a list of configured grants allowed to be used is configured, then the list of configured grants allowed to be used needs to include the identifiers of configured grants associated with the SL grant.

The target terminal needs to perform HARQ-ACK feedback for the PSSCH resource on the PSFCH. If the SL grant does not have associated PSFCH resources, then the hybrid automatic repeat request (HARQ) attribute associated with the logical channel is required to be disabled.

As shown in FIG. 4, an embodiment of the present disclosure provides a method for determining a target terminal, which is executed by a transmitting terminal and includes the following.

In step 401, in response to failing to select the target terminal that meets a carrier aggregation transmission condition and a first transmission condition and/or a second transmission condition, the SL grant is discarded.

If all of the following items are met, it may be determined that the transmitting terminal fails to select the target terminal for the SL grant:
all the target terminals associated with the unicast not supporting reception on the carrier associated with the sidelink grant;
all the Tx profiles associated with the target terminals associated with multicast and/or broadcast being not compatible with carrier aggregation; and
the target terminals associated with multicast and/or broadcast not having a Tx profile, and not meeting the first transmission condition and/or the second transmission condition.

For an SL grant, if the transmitting terminal fails to select a target terminal, the transmitting terminal may ignore the SL grant.

In order to further illustrate any embodiment of the present disclosure, a specific embodiment is provided below.

During the LCP process, the transmitting terminal needs to consider the receiving capability of the target terminal on the carrier associated with the sidelink grant when selecting the target terminal/address, which may include at least one of the following manners.

Manner 1 (carrier aggregation transmission condition): the target terminal/address selected by the transmitting terminal during the LCP process must support reception on the carrier associated with the sidelink grant.

Exemplarily, the transmitting terminal determines the target terminal/address through the following three conditions, that is, condition 1 (carrier aggregation transmission condition), condition 2 (first transmission condition) and/or condition 3 (second transmission condition) need to be met at the same time.

Condition 1 (carrier aggregation transmission condition): the target terminal/address supports reception on the carrier associated with the sidelink grant.
a) The target terminal/address may only be associated with unicast, and it is determined whether the target terminal/address supports reception on the carrier associated with the sidelink grant.

Condition 2 (first transmission condition): if SL DRX is applicable to the target terminal/address, the sidelink grant is within the activation period of the target terminal/address.

Condition 3 (second transmission condition): the target terminal/address has a MAC CE or a logical channel with the highest priority among all logical channels that meet the following conditions and MAC CE(s):
a) having SL data to be transmitted;
b) in a case there being any logical channel having SBj, and SBj > 0;
c) if the sidelink grant being a configured grant type 1, the sl-configuredGrantTyp1Allowed configuration associated with the logical channel allowing the MAC SDU of the logical channel to be transmitted on the configured grant type 1;
d) if a list of allowed configured grants being configured, the list containing identifiers of configured grants associated with the sidelink grant; and
e) if the sidelink grant not having an associated PSFCH resource, an HARQ attribute of the logical channel being HARQ-disabled.

Manner 2: the Tx profile associated with the target terminal/address selected by the transmitting terminal during LCP procedure is compatible with carrier aggregation.

In an Embodiment, the transmitting terminal determines the target terminal/address through the following three conditions, that is, condition 1 (carrier aggregation transmission condition), condition 2 (first transmission condition) and/or condition 3 (second transmission condition) need to be met at the same time.

Condition 1 (carrier aggregation transmission condition): the Tx profile associated with the target terminal/address is compatible with carrier aggregation.
a) The target terminal/address may only be associated with multicast or broadcast. The target terminal/address has an associated Tx profile, the Tx Profile is used to indicate whether the carrier aggregation is compatible, and it is determined whether the Tx profile associated with the target terminal/address is compatible with carrier aggregation.
b) The target terminal/address may only be associated with multicast or broadcast, and the target terminal/address has no associated Tx profile, the Tx profile is used to indicate whether carrier aggregation is compatible, and it is only determined whether the target terminal/address meets condition 2 (first transmission condition) and/or condition 3 (second transmission condition).

Condition 2 (first transmission condition): if SL DRX is applicable to the target terminal/address, the sidelink grant is within the activation period of the target terminal/address.

Condition 3 (second transmission condition): the target terminal/address has a MAC CE or a logical channel with the highest priority among all logical channels that meet the following conditions and MAC CE(s):
a) having SL data to be transmitted;
b) in a case there being any logical channel having SBj, and SBj > 0;
c) the s1-configuredGrantType1Allowed configuration associated with the logical channel allowing the MAC SDU of the logical channel to be transmitted on the configured grant type 1 if the sidelink grant being a configured grant type 1;
d) the list containing identifiers of configured grants associated with the sidelink grant if a list of allowed configured grants being configured; and
e) an HARQ attribute of the logical channel being HARQ-disabled if the sidelink grant not having an associated PSFCH resource.

Manner 3, in which all the target terminals/addresses associated with unicast do not support reception on the carrier associated with the sidelink grant,
and all the Tx profiles associated with target terminals/addresses associated with multicast/broadcast are not compatible with carrier aggregation, then the transmitting terminal ignores the sidelink grant.

As shown in FIG. 5, an embodiment of the present disclosure provides an apparatus for determining a target terminal, which is provided in a transmitting terminal and includes:
a processing module 110, configured to select a target terminal that at least meets a carrier aggregation transmission condition for a sidelink (SL) grant.

In an embodiment, the carrier aggregation transmission condition includes:
the target terminal being associated with unicast, and the target terminal supporting data reception on a carrier associated with the SL grant.

In an embodiment, the carrier aggregation transmission condition includes:
the target terminal being associated with multicast and/or groupcast, and a transmission attribute associated with the target terminal supporting the carrier aggregation transmission.

In an embodiment, the carrier aggregation transmission condition includes:
the target terminal being associated with multicast and/or groupcast, the target terminal not having an associated transmission attribute, and the target terminal meeting a first transmission condition and/or a second transmission condition.

The first transmission condition includes: an SL discontinuous reception (DRX) being applicable to the target terminal, and a period of the SL grant being within an activation period of the target terminal.

The second transmission condition includes: among logical channels that meet a third transmission condition and a medium access control control element (MAC CE), the target terminal having at least one MAC CE with highest priority and/or having at least one logical channel with highest priority.

In an embodiment, the third transmission condition includes:
having SL data to be transmitted, and
in a case that any of the logical channels has an SBj, SBj being greater than 0, and
in a case that the SL grant is a configured grant type 1, the logical channel being configured to allow a medium access control service data unit (MAC SDU) to be transmitted on the configured grant type 1, and
in a case that a list of allowed configured grants is configured, the list containing identifiers of configured grants associated with the SL grant, and
in a case that the SL grant does not have an associated physical sidelink feedback channel (PSFCH) resource, a hybrid automatic repeat request (HARQ) attribute associated with the logical channel being disabled.

In an embodiment, the processing module 110 is specifically configured to:
select the target terminal that meets the carrier aggregation transmission condition and meets a first transmission condition and/or a second transmission condition.

The first transmission condition includes: an SL discontinuous reception (DRX) being applicable to the target terminal, and a period of the SL grant being within an activation period of the target terminal.

The second transmission condition includes: among logical channels that meet a third transmission condition and a medium access control control element (MAC CE), the target terminal having at least one MAC CE with highest priority and/or having at least one logical channel with highest priority.

In an embodiment, the third transmission condition includes:
having SL data to be transmitted, and
in a case that any of the logical channels has an SBj, SBj being greater than 0, and
in a case that the SL grant is a configured grant type 1, the logical channel being configured to allow a MAC SDU to be transmitted on the configured grant type 1, and
in a case that a list of allowed configured grants is configured, the list containing identifiers of configured grants associated with the SL grant, and
in a case that the SL grant does not have an associated PSFCH resource, a hybrid automatic repeat request (HARQ) attribute associated with the logical channel being disabled.

In an embodiment, the processing module 110 is further configured to:
in response to failing to select the target terminal that meets the carrier aggregation transmission condition and the first transmission condition and/or the second transmission condition, discard the SL grant.

In an embodiment, the processing module 110 is specifically configured to:
during a processing procedure of logical channel prioritization (LCP), select the target terminal that at least meets the carrier aggregation transmission condition.

An embodiment of the present disclosure provides a communication device, including:
a processor; and
a memory for storing instructions executable by the processor.

The processor is configured to implement the method for determining the target terminal in any embodiment of the present disclosure when running the executable instructions.

In an embodiment, the communication device may include but is not limited to at least one of: a UE and a network device. The network device herein may include a core network or an access network device, etc. Here, the access network device may include a base station, and the core network may include AMF and SMF.

The processor may include various types of storage medium. The storage medium is a non-temporary computer storage medium that is able to continue to memorize information stored thereon after the user equipment loses power.

The processor may be connected to the memory via a bus or the like for reading an executable program stored in the memory, for example, at least one of the methods as shown in FIGS. 2 to 5.

An embodiment of the present disclosure further provides a computer storage medium, which stores a computer executable program, and the executable program executes the method for determining the target terminal in any embodiment of the present disclosure when being executed by a processor, for example, at least one of the methods shown in FIGS. 2 to 5.

With respect to the apparatuses in the above embodiments, the specific manners for performing operations for individual modules therein have been described in detail in the embodiments regarding the methods, which will not be elaborated herein.

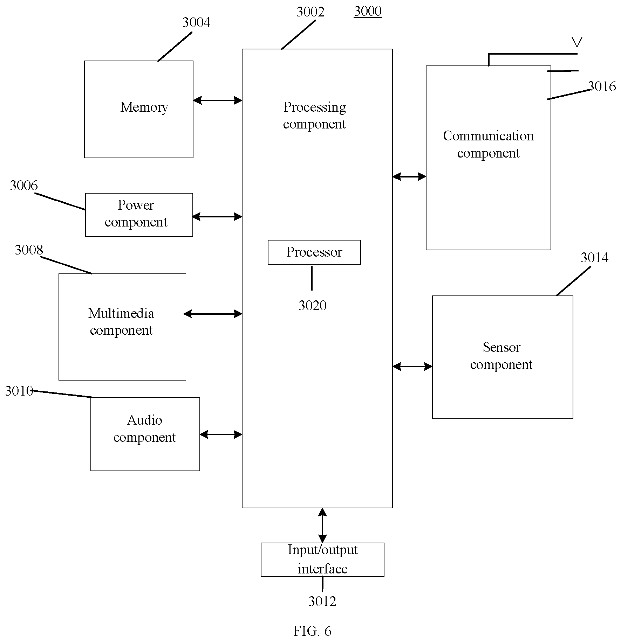

FIG. 6 is a block diagram of a user equipment 3000 shown according to an exemplary embodiment. For example, the user equipment 3000 may be a mobile phone, a computer, a digital broadcast terminal, a messaging device, a gaming console, a tablet, a medical device, an exercise equipment, a personal digital assistant, and the like.

Referring to FIG. 6, the user equipment 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the user equipment 3000, such as the operations associated with display, telephone calls, data communications, camera operations, and recording operations. The processing component 3002 may include one or more processors 3020 to execute instructions to perform all or part of the steps in the above-described methods. Moreover, the processing component 3002 may include one or more modules which facilitate the interaction between the processing component 3002 and other components. For instance, the processing component 3002 may include a multimedia module to facilitate the interaction between the multimedia component 3008 and the processing component 3002.

The memory 3004 is configured to store various types of data to support the operation of the user equipment 3000. Examples of such data include instructions for any applications or methods operated on the user equipment 3000, contact data, phonebook data, messages, pictures, video, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3006 provides power to various components of the user equipment 3000. The power component 3006 may include a power management system, one or more power sources, and any other components associated with the generation, management, and distribution of power in the user equipment 3000.

The multimedia component 3008 includes a screen providing an output interface between the user equipment 3000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 3008 includes a front camera and/or a rear camera. The front camera and the rear camera may receive an external multimedia datum while the user equipment 3000 is in an operation mode, such as a photographing mode or a video mode. Each of the front camera and the rear camera may be a fixed optical lens system or have focus and optical zoom capability.

The audio component 3010 is configured to output and/or input audio signals. For example, the audio component 3010 includes a microphone ("MIC") configured to receive an external audio signal when the user equipment 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 812 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide status assessments of various aspects of the user equipment 3000. For instance, the sensor component 3014 may detect an open/closed status of the user equipment 3000, relative positioning of components, e.g., the display and the keypad, of the user equipment 3000, a change in position of the user equipment 3000 or a component of the user equipment 3000, a presence or absence of user contact with the user equipment 3000, an orientation or an acceleration/deceleration of the user equipment 3000, and a change in temperature of the user equipment 3000. The sensor component 3014 may include a proximity sensor configured to detect the presence of nearby objects without any physical contact. The sensor component 3014 may also include a light sensor, such as a CMOS or CCD image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the user equipment 3000 and other devices. The user equipment 3000 can access a wireless network based on a communication standard, such as WiFi, 4G, or 5G, or a combination thereof. In one exemplary embodiment, the communication component 3016 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the user equipment 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 3004, executable by the processor 3020 in the user equipment 3000, for performing the above-described methods. For example, the non-transitory computer-readable storage medium may be a ROM, a random access memory (RAM), a CD-ROM, a magnetic tape, a floppy disc, an optical data storage device, and the like.

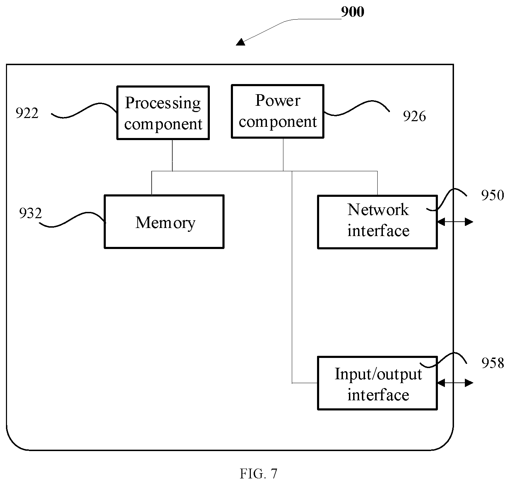

As shown in FIG. 7, an embodiment of the present disclosure illustrates a structure of a base station. For example, the base station 900 may be provided as a network side device. Referring to FIG. 7, the base station 900 includes a processing component 922, which further includes one or more processors, and a memory resource represented by a memory 932 for storing instructions executable by the processing component 922, such as an application program. The application program stored in the memory 932 may include one or more modules, each corresponding to a set of instructions. In addition, the processing component 922 is configured to execute instructions to perform any of the aforementioned methods applied to the base station.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as a Windows Server^{™}, a Mac OS X^{™}, a Unix^{™}, a Linux^{™}, a Free BSD^{™} or the like.

Other embodiments of the present disclosure will be apparent to those skilled in the art from consideration of the specification and practice of the contents disclosed here. The present disclosure is intended to cover any variations, uses, or adaptations of the present disclosure, which follows the general principles thereof and includes the common knowledge or habitual technical means in this technical field that is not disclosed in the present disclosure. The specification and embodiments are considered as exemplary only, with a true scope and spirit of the present disclosure being indicated by the appending claims.

It will be appreciated that the present disclosure is not limited to the exact construction that has been described above and illustrated in the accompanying drawings, and various modifications and changes can be made without departing from the scope thereof. The scope of the present disclosure is only limited by the appended claims.

## Claims

1. A method for determining a target terminal, performed by a transmitting terminal and comprising:
selecting a target terminal that at least meets a carrier aggregation transmission condition for a sidelink (SL) grant.

2. The method according to claim 1, wherein the carrier aggregation transmission condition comprises:
the target terminal being associated with unicast, and the target terminal supporting data reception on a carrier associated with the SL grant.

3. The method according to claim 1, wherein the carrier aggregation transmission condition comprises:
the target terminal being associated with multicast and/or groupcast, and a transmission attribute associated with the target terminal supporting the carrier aggregation transmission.

4. The method according to claim 1, wherein the carrier aggregation transmission condition comprises:
the target terminal being associated with multicast and/or groupcast, the target terminal not having an associated transmission attribute, and the target terminal meeting a first transmission condition and/or a second transmission condition, wherein,
the first transmission condition comprises: an SL discontinuous reception (DRX) being applicable to the target terminal, and a period of the SL grant being within an activation period of the target terminal; and
the second transmission condition comprises: among logical channels that meet a third transmission condition and a medium access control control element (MAC CE), the target terminal having at least one MAC CE with highest priority and/or having at least one logical channel with highest priority.

5. The method according to claim 4, wherein the third transmission condition comprises:
having SL data to be transmitted, and
in a case that any of the logical channels has an available token number SBj, SBj being greater than 0, and
in a case that the SL grant is a configured grant type 1, the logical channel being configured to allow a medium access control service data unit (MAC SDU) to be transmitted on the configured grant type 1, and
in a case that a list of allowed configured grants is configured, the list containing identifiers of configured grants associated with the SL grant, and
in a case that the SL grant does not have an associated physical sidelink feedback channel (PSFCH) resource, a hybrid automatic repeat request (HARQ) attribute associated with the logical channel being disabled.

6. The method according to any one of claims 1 to 3, wherein selecting the target terminal that at least meets the carrier aggregation transmission condition comprises:
selecting the target terminal that meets the carrier aggregation transmission condition and meets a first transmission condition and/or a second transmission condition, wherein,
the first transmission condition comprises: an SL discontinuous reception (DRX) being applicable to the target terminal, and a period of the SL grant being within an activation period of the target terminal; and
the second transmission condition comprises: among logical channels that meet a third transmission condition and a medium access control control element (MAC CE), the target terminal having at least one MAC CE with highest priority and/or having at least one logical channel with highest priority.

7. The method according to claim 6, wherein the third transmission condition comprises:
having SL data to be transmitted, and
in a case that any of the logical channels has an SBj, SBj being greater than 0, and
in a case that the SL grant is a configured grant type 1, the logical channel being configured to allow a MAC SDU to be transmitted on the configured grant type 1, and
in a case that a list of allowed configured grants is configured, the list containing identifiers of configured grants associated with the SL grant, and
in a case that the SL grant does not have an associated PSFCH resource, a hybrid automatic repeat request (HARQ) attribute associated with the logical channel being disabled.

8. The method according to claim 6, wherein the method further comprises:
in response to failing to select the target terminal that meets the carrier aggregation transmission condition and the first transmission condition and/or the second transmission condition, discarding the SL grant.

9. The method according to any one of claims 1 to 5, wherein selecting the target terminal that at least meets the carrier aggregation transmission condition comprises:
during a processing procedure of logical channel prioritization (LCP), selecting the target terminal that at least meets the carrier aggregation transmission condition.

10. An apparatus for determining a target terminal, provided in a transmitting terminal and comprising:
a processing module, configured to select a target terminal that at least meets a carrier aggregation transmission condition for a sidelink (SL) grant.

11. The apparatus according to claim 10, wherein the carrier aggregation transmission condition comprises:
the target terminal being associated with unicast, and the target terminal supporting data reception on a carrier associated with the SL grant.

12. The apparatus according to claim 10, wherein the carrier aggregation transmission condition comprises:
the target terminal being associated with multicast and/or groupcast, and a transmission attribute associated with the target terminal supporting the carrier aggregation transmission.

13. The apparatus according to claim 10, wherein the carrier aggregation transmission condition comprises:
the target terminal being associated with multicast and/or groupcast, the target terminal not having an associated transmission attribute, and the target terminal meeting a first transmission condition and/or a second transmission condition, wherein,
the first transmission condition comprises: an SL discontinuous reception (DRX) being applicable to the target terminal, and a period of the SL grant being within an activation period of the target terminal; and
the second transmission condition comprises: among logical channels that meet a third transmission condition and a medium access control control element (MAC CE), the target terminal having at least one MAC CE with highest priority and/or having at least one logical channel with highest priority.

14. The apparatus according to claim 13, wherein the third transmission condition comprises:
having SL data to be transmitted, and
in a case that any of the logical channels has an available token number SBj, SBj being greater than 0, and
in a case that the SL grant is a configured grant type 1, the logical channel being configured to allow a medium access control service data unit (MAC SDU) to be transmitted on the configured grant type 1, and
in a case that a list of allowed configured grants is configured, the list containing identifiers of configured grants associated with the SL grant, and
in a case that the SL grant does not have an associated physical sidelink feedback channel (PSFCH) resource, a hybrid automatic repeat request (HARQ) attribute associated with the logical channel being disabled.

15. The apparatus according to any one of claims 10 to 12, wherein the processing module is specifically configured to:
select the target terminal that meets the carrier aggregation transmission condition and meets a first transmission condition and/or a second transmission condition, wherein,
the first transmission condition comprises: an SL discontinuous reception (DRX) being applicable to the target terminal, and a period of the SL grant being within an activation period of the target terminal; and
the second transmission condition comprises: among logical channels that meet a third transmission condition and a medium access control control element (MAC CE), the target terminal having at least one MAC CE with highest priority and/or having at least one logical channel with highest priority.

16. The apparatus according to claim 15, wherein the third transmission condition comprises:
having SL data to be transmitted, and
in a case that any of the logical channels has an SBj, SBj being greater than 0, and
in a case that the SL grant is a configured grant type 1, the logical channel being configured to allow a MAC SDU to be transmitted on the configured grant type 1, and
in a case that a list of allowed configured grants is configured, the list containing identifiers of configured grants associated with the SL grant, and
in a case that the SL grant does not have an associated PSFCH resource, a hybrid automatic repeat request (HARQ) attribute associated with the logical channel being disabled.

17. The apparatus according to claim 15, wherein the processing module is further configured to:
in response to failing to select the target terminal that meets the carrier aggregation transmission condition and the first transmission condition and/or the second transmission condition, discard the SL grant.

18. The apparatus according to any one of claims 10 to 14, wherein the processing module is specifically configured to:
during a processing procedure of logical channel prioritization (LCP), select the target terminal that at least meets the carrier aggregation transmission condition.

19. A communication device, wherein the communication device comprises:
a processor; and
a memory for storing instructions executable by the processor;
wherein the processor is configured to implement the method for determining the target terminal target terminal according to any one of claims 1 to 9 when running the executable instructions.

20. A computer storage medium, wherein the computer storage medium stores a computer executable program, and the executable program implements the method for determining the target terminal target terminal according to any one of claims 1 to 9 when being executed by a processor.
